# EUROPÄISCHE PATENTSCHRIFT

(11) **EP 1 114 268 B1**
(45) Veröffentlichungstag und Bekanntmachung des Hinweises auf die Patenterteilung: **25.06.2003**
(21) Anmeldenummer: 99969481.3
(22) Anmeldetag: 01.04.1999
(51) Int. Cl.: F16K 31/08, F25B 5/00

(54) **KÄLTEERZEUGUNGSKREIS FÜR EINE KÜHLANLAGE**
REFRIGERATING CIRCUIT FOR A REFRIGERATION FACILITY
CIRCUIT DE PRODUCTION DE FROID POUR INSTALLATION REFRIGERANTE

(30) Priorität: 17.09.1998 DE 19842497
(43) Veröffentlichungstag der Anmeldung: 11.07.2001
(73) Patentinhaber: SCHROTT, Harald, 88131 Lindau (DE)
(72) Erfinder: OTT, Hubert, D-88212 Ravensburg (DE)
(74) Vertreter: Patentanwälte Eisele, Otten & Roth
(86) Internationale Anmeldenummer: DE9900999
(87) Internationale Veröffentlichungsnummer: WO00017554

(56) Entgegenhaltungen:
- DE-A- 3 718 490
- DE-A- 4 117 958
- DE-A- 4 224 470
- DE-B- 1 282 402

## Beschreibung

Die Erfindung betrifft ein bistabiles elektromagnetisches Ventil nach dem Oberbegriff des Anspruchs 1 und einen Kälteerzeugungskreis für eine Kühlanlage mit mehreren Kühlräumen nach Anspruch 2.

Eine derartige Vorrichtung ist mit der DE 37 18 490 bekannt geworden. Der Kälteerzeugungskreis gemäß dieser Patentschrift umfaßt ein Umschaltventil, bei dem eine Ventilkammer zwischen zwei Polschuhen angeordnet ist, die einen Einlaßkanal sowie zwei Auslaßkanäle aufweisen. Seitlich neben der Ventilkammer sind zwei Permanentmagnete angeordnet. Ein Polschuh erstreckt sich ins Innere einer Steuerspule, die zum Umschalten des mit Hilfe der Permanentmagneten gebildeten bistabilen Ventils dient. Ein Ventilelement ist in der Ventilkammer angeordnet und zwischen den beiden Auslaßkanälen hin und her beweglich.

Ein Jochblech für den Rückschluß sowohl der Permanentmagnete als auch der Spule zu den beiden Polschuhen ist um die gesamte Anordnung herum an den beiden Permanentmagneten vorbei bis zur Rückseite der elektromagnetischen Spule geführt.

Durch die einseitig angeordnete Steuerspule ergeben sich unterschiedliche Antriebskräfte für das Ventilelement bei Beaufschlagung der Spule. Die Steuerspule muß entsprechend groß dimensioniert sein, um auch für die entfernter gelegene Schließposition eine entsprechende Antriebskraft zu erzeugen.

Um dennoch eine definierte, für beide Arbeitsstellungen gleichgroße Schließkraft zu gewährleisten, sind zwei Kugeln in dem Ventilelement gehaltert und über eine Spiralfeder nachgiebig gelagert. Die Federkraft dieser Druckfeder definiert damit die Schließkraft des Ventils.

Durch die hohen Anzugsmomente der Steuerspule kommt es zu einem entsprechend harten Aufprall nicht nur der als Schließkörper dienenden, federnd gelagerten Kugel, sondern des Ventilelementes als Ganzes auf den Polschuhen, wodurch ein entsprechender Verschleiß und insbesondere auch eine unerwünschte Geräuschentwicklung verursacht wird. Die druckfedergelagerte Lagerung im Schließelement ist zudem aufwendig und entsprechend kostenträchtig.

Die Erfindung hat demgegenüber die Aufgabe, ausgehend von dem Stand der Technik, einen Kälteerzeugungskreis vorzuschlagen, der im Betrieb verschleiß- und geräuschärmer ist.

Diese Aufgabe wird, ausgehend von einem bistabilen elektromagnetischen Ventil nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend wird erfindungsgemäß ein Umschaltventil vorgesehen, bei dem die Steuerspule seitlich versetzt gegenüber der Mittelachse der Pole angeordnet ist. Hierdurch kann der Unterschied im Abstand der Steuerspule zu den beiden Polen verringert werden, so daß sich entsprechend auch die Unterschiede der Schließkraft des Ventils in beiden Arbeitsstellungen und die maximal notwendige Antriebskraft, die durch die Steuerspule aufzubringen ist, verringert. Dadurch wiederum ergibt sich ein weniger harter Aufprall des Ankers bzw. Schließkörpers auf seinem jeweiligen Gegenanschlag, wodurch sich der Verschleiß und die Geräuschentwicklung in erheblichem Maße reduziert.

Weiterhin wird bei der Erfindung die Steuerspule parallel neben der Ventilkammer angeordnet, wobei der Gesamtaufbau des Ventils spiegelsymmetrisch zu einer Mittelebene der Ventilkammer quer zur Bewegungsrichtung des das Ventilelement bildenden Ankers ausgebildet wird. Die Anordnung zu den beiden Polen ist hierbei spiegelbildlich genau gleich, so daß die in beiden Richtungen wirkende Triebkraft der Steuerspule auf das Ventilelement ebenfalls nahezu gleich ist. Hierdurch kann die Größe der Spule bzw. deren Steuerstrom, die Impulsdauer des Steuerstroms, usw. soweit reduziert werden, daß durch die Anzugskraft der Spule lediglich das Umkippen von einer stabilen Arbeitsstellung in die andere bewirkt wird. Der Aufschlag auf dem Ventilsitz wird minimal.

Der spiegelsymmetrische Aufbau, bei dem beispielsweise beide Auslaßkanäle in Längsrichtung und der Einlaßkanal in Querrichtung auf Höhe der Mittelebene angeordnet sind, stellt sicher, daß für beide Arbeitsstellungen des Ankers die gleichen Kräfteverhältnisse herrschen, so daß die maximal während des Betriebs vorherrschende Anzugskraft und somit auch der Aufprall des Ankers bzw. Schließkörpers auf dem Ventilsitz weiter reduziert werden können.

In einer besonders vorteilhaften Ausführungsform der Erfindung wird die Schließkraft des Ventils im wesentlichen durch die Permanentmagnete bestimmt. Bei einer erfindungsgemäßen Ausgestaltung des Umschaltventils ist dies möglich, da die Triebkraft der Steuerspule entsprechend vermindert werden kann.

Bei einer neben der Ventilkammer angeordneten Steuerspule besteht unter Umständen die Gefahr, daß durch durchgehende Jochbleche zwischen den beiden Polen mit geringem magnetischem Widerstand zumindest ein Teil des Magnetfeldes der Steuerspule nicht über die beiden Pole und den Anker geführt wird, sondern durch die Jochbleche kurzgeschlossen ist. Dies kann beispielsweise durch größere Dimensionierung der Steuerspule ausgeglichen werden, in einer besonderen Ausführungsform wird zur Behebung dieses Problems eine Abweichung von den bisher üblichen Jochblechanordnungen vorgeschlagen.

Dabei werden keine mit beiden magnetischen Polen in Verbindung stehenden Rückschlußmittel für den magnetischen Rückschluß eines oder mehrerer Permanentmagnete zu den Polen vorgesehen.

Derartige mit beiden Polen in Verbindung stehende Rückschlußmittel bedingen bisher die koaxiale Spulenanordnung zur Mittelachse der Ventilkammer bzw. der Pole. Durch eine anderweitige Spulenlage unter Beibehaltung dieser Rückschlußmittel zwischen den beiden Polen würde sich ein magnetischer Kurzschluß ergeben, durch den das von der Steuerspule erzeugte Magnetfeld außerhalb der Pole verlaufen würde, die in der Regel durch die Ventilfunktion des Ventilelementes an wenigstens einer Stelle in Längsrichtung einen Luftspalt und somit einen erhöhten magnetischen Widerstand aufweisen.

Durch den Verzicht auf derartige durchgehende Rückschlußmittel ist eine andere Spulenlage ermöglicht, wodurch neue konstruktive Möglichkeiten in der Gestaltung eines erfindungsgemäßen Umschaltventils verwirklicht werden können.

Insbesondere können nunmehr Umschaltventile aufgebaut werden, bei denen der Abstand der Steuerspule zwischen den jeweiligen Polen und somit auch die durch die Steuerspule erzeugten Anzugskräfte in beide Steuerrichtungen einander angeglichen werden. Die Steuerspule kann insgesamt hierdurch kleiner ausgelegt werden. Die bislang überhöhte Anzugskraft am spulennahen Pol wird reduziert, so daß der Aufprall an dieser Stelle geschwächt und infolgedessen die Geräuschentwicklung und der Verschleiß vermindert wird.

Durch die ohne Rückschluß vorhandenen großen Luftspalten im Permanentmagnetkreis wirken sich zudem Fertigungstoleranzen bei den Permanentmagneten weniger aus, wodurch der Aufwand stärkerer Magnete zumindest in wirtschaftlicher Hinsicht wenigstens teilweise zu kompensieren ist.

Für eine vorteilhafte Weiterbildung der Erfindung ergibt sich die Möglichkeit, auf einen federgelagerten Schließkörper zu verzichten, so daß die Schließkraft des Ventils allein durch die Dimensionierung und Anordnung eines oder mehrerer Permanentmagnete definiert wird. Der harte Aufprall des Ventilelementes auf dem Pol gemäß dem Stand der Technik kann dabei in Verbindung mit einer entsprechenden Dimensionierung oder Ansteuerung der Steuerspule weitgehend vermieden werden, so daß diese Weiterbildung noch geräusch- und verschleißärmer wird.

Um eine hohe Lebensdauer des Ventils zu erzielen, empfiehlt es sich, abriebfestes und hartes Material, insbesondere an den Dichtflächen zu verwenden. Da die üblicherweise verwendeten Kühlmittel zum Teil chemisch sehr aggressiv sind, ist auch in dieser Hinsicht auf eine geeignete Materialauswahl zu achten. Beide Voraussetzungen werden beispielsweise durch ein entsprechendes Metall wie Stahl oder dergleichen oder aber auch durch eine Keramik erfüllt. Diese Materialien sind hart und abriebfest und sowie chemisch sehr resistent.

In einer vorteilhaften Ausführungsform der Erfindung umfaßt der Anker bzw. das Ventilelement eine gehärtete Oberfläche, beispielsweise durch das Anbringen eines gehärteten Schließkörpers zur Abdichtung einer Auslaßöffnung.

An die Dichtigkeit eines erfindungsgemäßen Ventils werden, ebenso wie an die Lebensdauer, sehr hohe Anforderungen gestellt. Auch nach mehrjährigem Betrieb in einem Kühlmittelkreislauf sollte die Betriebssicherheit des Ventils nicht beeinträchtigt sein. Durch eine gehärtete Oberfläche bzw. einen gehärteten Schließkörper, wie oben angeführt, läßt sich die Verschleißfestigkeit des Ventils erhöhen.

Zum gleichen Zweck empfiehlt es sich, gehärtete Ventilsitze vorzusehen, die im Falle des obenerwähnten symmetrischen Gesamtaufbaus an der Innenseite der Pole vorzusehen sind.

Die Härtung von weichmagnetischem Material ist problematisch, da die Temperaturbehandlung zu einer Magnetisierung führen kann, so daß letztendlich ein hartmagnetisches Material vorliegt. Diesem Problem kann durch eine partielle Härtung, insbesondere durch eine Randschichthärtung, entgegengewirkt werden. Gehärtete Dichtflächen ermöglichen eine größere Schließkraft bei geringerem Verschleiß.

Vorzugsweise wird in einer besonderen Ausführungsform der Erfindung ein solcher Ventilsitz durch eine Laserhärtung oder eine Randschichthärtung eines in das Material des Pols eingearbeiteten Ventilsitzes hergestellt.

In einer besonderen Ausführungsform der Erfindung wird als Schließkörper eine Kugel verwendet. Diese Kugel kann bei einem erfindungsgemäßen Ventil, wie bereits oben angeführt, fest mit dem Anker verbunden sein, da die Schließkraft des Ventils durch die Dimensionierung und Anordnung der Permanentmagneten und nicht durch mechanische Hilfsmittel, wie im Stand der Technik, zu begrenzen ist.

Aufgrund der günstigeren Spulenanordnung sowie dem Verzicht auf die bewegliche Lagerung eines Schließkörpers kann das Ventilelement bzw. der Anker mit Schließkörper insgesamt kleiner ausgeführt werden. Hierdurch wird bei der Verstellung des Ventils von einer Arbeitsstellung in die andere weniger kinetische Energie auf das Ventilelement aufgebracht, was wiederum den Aufprall auf dem jeweiligen Ventilsitz schwächt und einer weiteren Reduzierung des Verschleißes bzw. der Geräuschentwicklung dient.

Ein kleiner Magnetanker bewirkt außerdem eine kurze umspülte Strecke innerhalb des Ventils, so daß die Verschmutzungs- bzw. Verstopfungsgefahr durch mitgespülte Partikel zwischen dem Anker und der Wandung des Ventilkörpers verringert wird.

Vorteilhafterweise wird ein Verhältnis von Durchmesser zu Länge des Ventilelementes bzw. des Ankers von größer als 1:4, z. B. 1:1,5 gewählt. Die Reduzierung des magnetisierbaren Materials im Anker ist gegebenenfalls durch einen Permanentmagneten mit höherer Energiedichte zu kompensieren, sofern dies für eine ausreichende Schließkraft des Ventils erforderlich ist.

In einer Weiterbildung der Erfindung werden die konstruktiven Möglichkeiten in der Gestaltung des Ventilelementes, z. B. durch entsprechende Ausgestaltung der Halterung eines Schließkörpers dahingehend genutzt, daß auch in geschlossenem Zustand des Ventils ein Restluftspalt zwischen dem Anker und dem jeweiligen Pol verbleibt. Hierdurch wird der Einfluß der Remanenz gemindert.

Weiterhin wird hierdurch vermieden, daß der Magnetanker an einem der Pole anschlägt. Hierdurch erfolgt kein stirnseitiger Verschleiß des Magnetankers, so daß ein konstanter Hub über eine lange Lebensdauer des Ventils gewährleistet ist.

Durch den Wegfall des Federweges des Schließkörpers gegenüber dem Stand der Technik ist der Hub des Magnetankers insgesamt kleiner auszubilden.

In einer Weiterbildung der Erfindung wird das Ventilgehäuse als Rohr mit endseitiger Verjüngung vorgesehen. Diese Ausbildungsform gewährleistet eine sehr hohe Dichtigkeit gegenüber dem Kühlmittel, insbesondere wird die aus Sicherheitsgründen für derartige Ventile geforderte Dichtigkeit gegenüber Helium hierdurch leichter erzielbar.

In einer Weiterbildung der Erfindung wird die Spule demontierbar vorgesehen. Dies wird dadurch erleichtert, daß die Spule nunmehr durch den Verzicht auf die magnetischen Rückschlußmittel auch neben der Ventilkammer angeordnet werden kann.

Eine besondere Ausführungsform der Erfindung wird mit einer Vergußmasse versehen, die wenigstens teilweise um das Ventilgehäuse herum angeordnet ist. Eine derartige Vergußmasse kann als Geräuschdämpfung wirken und somit die erfindungsgemäß erzielbaren Vorteile weiter erhöhen.

Vorzugsweise wird die Vergußmasse zur Befestigung eines oder mehrerer Permanentmagnete verwendet, indem diese wenigstens teilweise ebenfalls von der Vergußmasse umschlossen werden.

Auch etwaige Jochbleche können durch eine derartige Vergußmasse befestigt werden.

Eine solche Vergußmasse kann auch die Leitungsanschlüsse für das Kühlmittel oder sonstige Befestigungselemente umschließen und somit einen Schutz gegen mechanische Belastung bieten. Insbesondere bei den Leitungsanschlüssen wird hierdurch die Leckgefahr aufgrund mechanischer Verformung vermieden.

Ein Ausführungsbeispiel der Erfindung ist in der Zeichnung dargestellt und wird anhand der Figuren nachfolgend näher erläutert.

Im Einzelnen zeigen
- Fig. 1: einen Längsschnitt durch ein Ventil für einen erfindungsgemäßen Kühlmittelkreislauf,
- Fig. 2: einen Querschnitt durch ein Ventil gemäß Fig. 1,
- Fig. 3: einen Längsschnitt durch ein Ventil gemäß Fig. 1 durch eine senkrecht dazu angeordnete Schnittebene,
- Fig. 4: eine Darstellung eines weiteren Ausführungsbeispiels in einer Schnittebene gemäß Fig. 3.

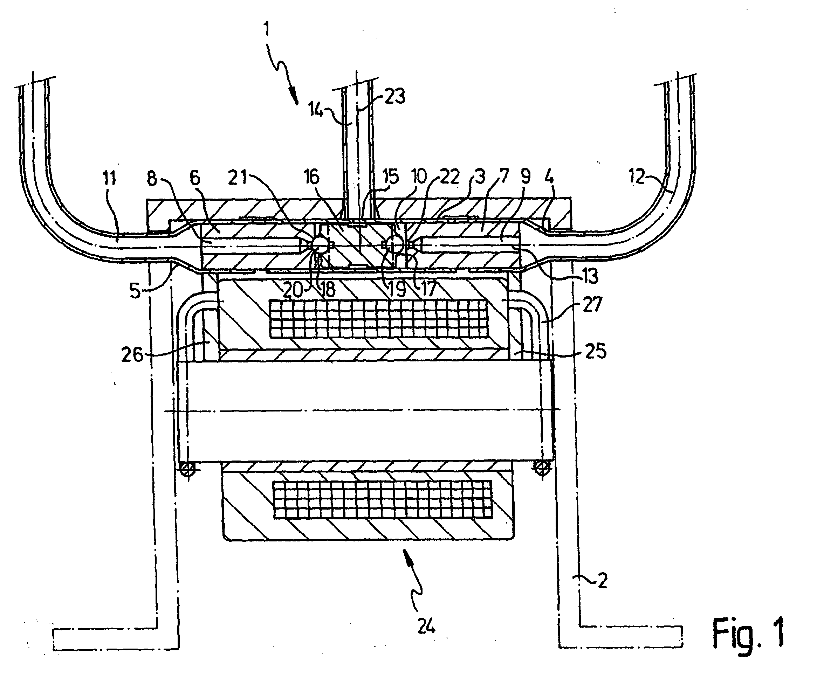

Das Ventil 1 gemäß Fig. 1 umfaßt ein Gehäuse 2, in dem ein Rohr 3 mit endseitigen Verjüngungen 4, 5 angeordnet ist. Im Innern des Rohrs 3 sind zwei magnetische Pole 6, 7 aus magnetisierbarem Material angeordnet. Jeder Pol 6, 7 weist eine axiale Durchgangsbohrung 8, 9 auf, die eine mittig angeordnete Ventilkammer 10 mit zwei Auslaßleitungen 11, 12 verbinden. Die Auslaßleitungen 11, 12 bestehen aus endseitigen Verlängerungen des Rohres 3.

Mittig ist an der Ventilkammer 10 quer zur Ventilachse 13 eine Einlaßleitung 14 mit dem Rohr 3 verbunden, beispielsweise verschweißt oder verlötet. Die Einlaßleitung 14 steht über eine Durchgangsbohrung 15 mit der Ventilkammer 10 in Verbindung.

Im Innern der Ventilkammer 10 befindet sich ein Anker 16 aus magnetisierbarem Material, an dem in endseitig vorstehenden Fassungen 17, 18 jeweils eine Kugel 19, 20 als Schließkörper befestigt ist.

In den Polen 6, 7 ist innenseitig, d. h. der Ventilkammer 10 zugewandt, jeweils ein konusförmiger Ventilsitz 21, 22, beispielsweise durch Randschichthärtung des Materials der Pole 6, 7 vorgesehen.

Symmetrisch zur Mittelachse 23, die quer zur Ventilachse 13 verläuft, ist parallel zu dem den Ventilkörper bildenden Rohr 3 eine Steuerspule 24 angeordnet. In zwei mit dem Gehäuse 2 in Verbindung stehenden Laschen 25, 26, die zugleich als Jochblech für den magnetischen Rückschluß der Spule 24 zu den Polen 6, 7 dienen, ist ein Befestigungsbügel 27 drehbar gelagert, der in seiner geschlossenen Stellung den Kern der Spule so weit umgreift, daß die Spule 24 an dem Ventilkörper 3 lösbar fixiert ist.

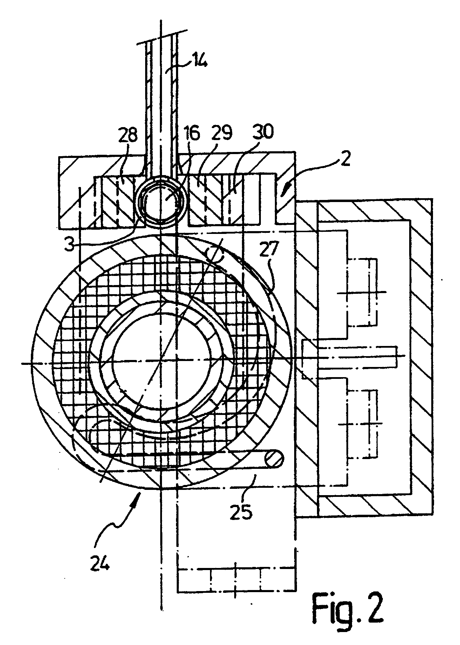

In Fig. 2 ist diese Art der Spulenbefestigung mit Hilfe des gestrichelt dargestellten Befestigungsbügels 27 ebenfalls ersichtlich.

Weiterhin ist dieser Darstellung die Anordnung zweier Permanentmagnete 28, 29 beidseits des Ventilkörpers 3 mit dem darin befindlichen Anker 16 zu entnehmen. Außerhalb der Permanentmagnete 28, 29 ist eine Vergußmasse 30 aufgebracht, die die Magnete 28, 29 sowie die als Jochbleche dienenden Laschen 25, 26 hält.

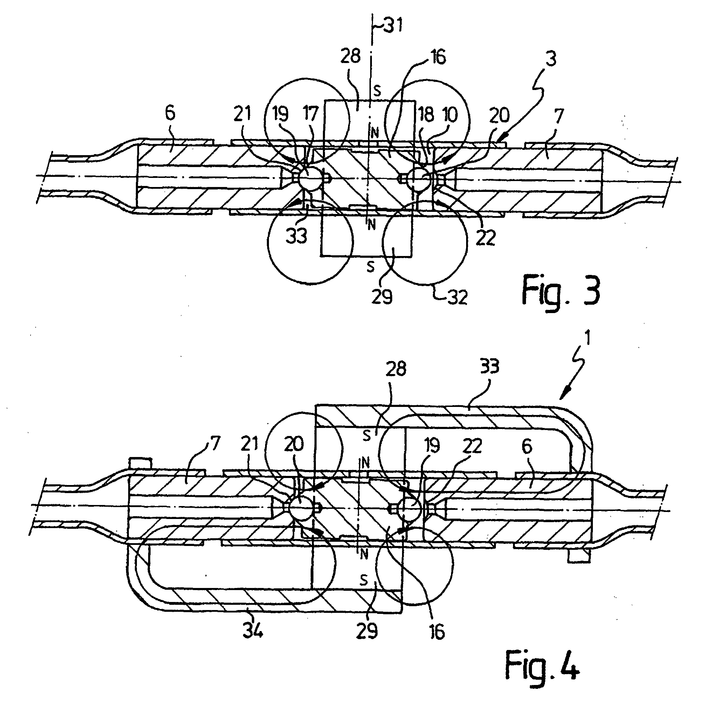

In der Darstellung gemäß Fig. 3 ist erkennbar, daß der gesamte Ventilaufbau symmetrisch zu einer durch die Mittelachse 31 und die Mittelachse 23 (s. Fig. 1) aufgespannten Mittelebene aufgebaut ist. Die vollständige Symmetrie liegt natürlich nur dann vor, wenn der Anker 16 in einer Mittelposition zwischen seinen Arbeitsstellungen liegt, die jedoch aufgrund der bistabilen Funktion des Ventils äußerst labil und im Betrieb nicht erwünscht ist.

Der symmetrische Ventilaufbau einschließlich der Steuerspule erlaubt es, ein Ventil zu schaffen, bei dem die Schließkraft in beiden Arbeitsstellungen genau gleich ist und zudem auch die von der Steuerspule benötigte Antriebskraft zum Umschalten zwischen den Arbeitsstellungen in jede Richtung wiederum genau gleich ist. Zum einen kann hierdurch auf eine aufwendige Lagerung des Schließkörpers im Anker verzichtet werden, zum anderen können die einzelnen Komponenten, insbesondere die Steuerspule kleiner dimensioniert werden. Das Anzugsmoment bzw. die Antriebskraft der Steuerspule kann soweit reduziert werden, daß der Anker lediglich über die Umschaltschwelle von einer Arbeitsstellung in die andere springt. Gegebenenfalls kann auch die Impulsdauer des Schaltimpulses entsprechend kurz gewählt werden. Im Extremfall wird der Aufprall des Schließkörpers auf seinem Ventilsitz ebenso wie die Schließkraft im wesentlichen nur durch den Anzug der Permanentmagneten bestimmt.

Die beiden Magnete 28, 29 sind beidseits des Ventilkörpers 3 auf Höhe der Mittelachse 31 angebracht und zeigen mit ihrem jeweils gleichnamigen Pol zur Ventilkammer 10 hin. Hierdurch ergibt sich der mit vier Kreislinien 32 angedeutete Feldverlauf des resultierenden Magnetfeldes. Durch diese Anordnung wird der Anker 16 in seinen beiden Arbeitsstellungen fixiert, bei denen die Kugeln 19, 20 auf ihren jeweiligen Ventilsitz 21, 22 aufliegen.

Wie anhand von Fig .3 erkennbar, sind keinerlei Rückschlußmittel für die Permanentmagnete vorhanden, so daß der Feldverlauf einer vor oder hinter der Darstellungsebene angeordneten Steuerspule 24 im Wesentlichen durch deren Jochbleche und die Pole 6, 7 verläuft und somit seine volle Wirkung auf den Anker 16 entfalten kann.

In der Darstellung gemäß Fig. 3 ist ebenfalls erkennbar, daß auch bei geschlossenem Ventil durch die vorstehende Fassung 17, 18 ein Restluftspalt 33 zwischen dem Anker 16 und dem Pol 6 bzw. Pol 7 verbleibt, wodurch der Einfluß der magnetischen Remanenz verringert wird.

Fig. 4 zeigt eine alternative Ausführungsform, bei der jeweils ein Permanentmagnet 28, 29 über ein Rückschlußblech 33, 34 mit jeweils einem Pol 6, 7 gekoppelt ist. Hierdurch ergibt sich jeweils auf einer Seite des Ventilkörpers 3 ein gebündelter Feldverlauf des Magnetfeldes in achsenparalleler Richtung durch den jeweiligen Pol 6, 7, wodurch das Anzugsmoment auf den Anker 16 erhöht wird. Das durch diese nicht achsensymmetrische Anordnung ebenfalls nicht spiegelbildliche Magnetfeld verursacht ein Drehmoment auf den Anker 16, was jedoch bei guter Führung des Ankers in axialer Richtung nicht zuletzt aufgrund der als Schließkörper dienenden, sich im jeweiligen Ventilsitz 21, 22 selbst zentrierenden Kugeln 19, 20, in bestimmten Anwendungsfällen nicht störend sein muß.

### Bezugszeichenliste:

- 1: Ventil
- 2: Gehäuse
- 3: Rohr bzw. Ventilkörper
- 4: Verjüngung
- 5: Verjüngung
- 6: Pol
- 7: Pol
- 8: Durchgangsbohrung
- 9: Durchgangsbohrung
- 10: Ventilkammer
- 11: Auslaßleitung
- 12: Auslaßleitung
- 13: Ventilachse
- 14: Einlaßleitung
- 15: Durchgangsbohrung
- 16: Anker
- 17: Fassung
- 18: Fassung
- 19: Kugel
- 20: Kugel
- 21: Ventilsitz
- 22: Ventilsitz
- 23: Mittelachse
- 24: Steuerspule
- 25: Lasche bzw. Jochblech
- 26: Lasche bzw. Jochblech
- 27: Befestigungsbügel
- 28: Permanentmagnet
- 29: Permanentmagnet
- 30: Vergußmasse
- 31: Mittelachse
- 32: Feldverlauf
- 33: Restluftspalt
- 34: Rückschlußblech
- 35: Rückschlußblech

## Patentansprüche

1. Bistabiles elektromagnetisches Ventil für einen Kälteerzeugungskreislauf für eine Kühlanlage mit folgenden Merkmalen:
- einer Ventilkammer (10) mit wenigstens einer Einlaßöffnung (14) und wenigstens zwei Auslaßöffnungen (11, 12),
- einem Ventilelement (16) wenigstens teilweise aus magnetischem Material, das keinen Permanentmagneten umfaßt, zwischen wenigstens zwei Arbeitsstellungen in der Ventilkammer (10) bewegbar ist und dabei jeweils eine der beiden Auslaßöffnungen verschließt, während die andere geöffnet wird,
- Mittel zum Erzeugen eines Permanentmagnetfelds zum Halten des Ventilelementes (16) in jeweils einer Arbeitsstellung, die zwei Pole (6, 7) und wenigstens einen außerhalb der Ventilkammer (10) angeordneten Permanentmagneten (28, 29) aufweisen,
- einer Steuerspule (24) zur Erzeugung eines Steuermagnetfeldes zum wahlweisen Bewegen des Ventilelementes (16) zwischen den Arbeitsstellungen,
**dadurch gekennzeichnet, daß**
- die Steuerspule (24) im wesentlichen parallel zur Mittelachse der Pole (6, 7) neben der Ventilkammer (10) angeordnet ist und
- das Ventil einen spiegelsymmetrischen Gesamtaufbau bezüglich einer Mittelebene der Ventilkammer (10) quer zur Bewegungsrichtung des Ventilelementes (16) aufweist.

2. Kälteerzeugungskreis für eine Kühlanlage mit mehreren Kühlräumen, einem Kompressor, einem Kondensator, mit mehreren, jeweils einem der Kühlräume zugeordneten Verdampfer und wenigstens einem bistabilen elektromagnetischen Umsteuerventil gemäß Anspruch 1 zur Verbindung des Kondensators mit einem oder mehreren der Verdampfer.

3. Kälteerzeugungskreis nach Anspruch 2 **dadurch gekennzeichnet, daß** keine mit beiden Polen (6, 7) in Verbindung stehenden Rückschlußmittel für den magnetischen Rückschluß von dem wenigstens einen Permanentmagneten zu den Polen (6, 7) vorgesehen sind.

4. Kälteerzeugungskreis nach Anspruch 2 **dadurch gekennzeichnet, daß** die Schließkraft des Umschaltventils durch einen oder mehrere Permanentmagneten (28, 29) bestimmt ist.

5. Kälteerzeugungskreis nach einem der vorgenannten Ansprüche 2-4 **dadurch gekennzeichnet, daß** ein Schließkorper (19, 20) fest mit dem Ventilelement (16) verbunden ist.

6. Kälteerzeugungskreis nach einem der vorgenannten Ansprüche 2-5 **dadurch gekennzeichnet, daß** das Ventilelement Anker (16) des Umschaltventils (1) eine gehärtete Dichtfläche umfaßt.

7. Kälteerzeugungskreis nach einem der vorgenannten Ansprüche 2-6 **dadurch gekennzeichnet, daß** das Ventilelement (16) des Umschaltventils (1) einen wenigstens teilweise gehärteten Schließkörper (19, 20) umfaßt.

8. Kälteerzeugungskreis nach einem der vorgenannten Ansprüche 2-7 **dadurch gekennzeichnet, daß** das Umschaltventil (1) einen gehärteten Ventilsitz (21, 22) umfaßt.

9. Kälteerzeugungskreis nach einem der vorgenannten Ansprüche 2-8 **dadurch gekennzeichnet, daß** im Umschaltventil (1) eine Kugel (19, 20) als Schließkörper im Ventilelement (16) gelagert ist.

10. Kälteerzeugungskreis nach einem der vorgenannten Ansprüche 2-9 **dadurch gekennzeichnet, daß** das Verhältnis des Durchmessers zur Länge des Ventilelements (16) größer als 1:4 ist.

11. Kälteerzeugungskreis nach einem der vorgenannten Ansprüche 2-10 **dadurch gekennzeichnet, daß** ein Restluftspalt (33) zwischen dem Ventilelement (16) und einem Pol (6, 7) vorgesehen ist.

12. Kälteerzeugungskreis nach einem der vorgenannten Ansprüche 2-11 **dadurch gekennzeichnet, daß** die Steuerspule (24) des Umschaltventils (1) demontierbar ist.

13. Kälteerzeugungskreis nach einem der vorgenannten Ansprüche 2-12 **dadurch gekennzeichnet, daß** eine Vergußmasse im Umschaltventil (1) vorgesehen ist, die den Ventilkörper (3) wenigstens teilwelse umgibt.

14. Kälteerzeugungskreis nach einem der vorgenannten Ansprüche 2-13 **dadurch gekennzeichnet, daß** das Umschaltventil eine Vergußmasse zur Befestigung wenigstens eines Permanentmagneten (28, 29) aufweist.

15. Kälteerzeugungskreis nach einem der vorgenannten Ansprüche 2-14 **dadurch gekennzeichnet, daß** das Umschaltventil (1) eine Vergußmasse (30) zur Befestigung wenigstens eines Jochblechs (25, 26) für die Steuerspule (24) umfaßt.

16. Kühl- oder Gefriergerät, **dadurch gekennzeichnet, daß** es einen Kälteerzeugungskreis nach einem der vorgenannten Ansprüche 2-15 aufweist.

## Claims

1. Bistable electromagnetic valve for a refrigerating circuit for a refrigerating system comprising the following features:
- a valve chamber (10) having at least one inlet opening (14) and at least two outlet openings (11, 12),
- a valve element (16) made at least partially from magnetic material which does not include permanent magnets, which is movable between at least two working positions in the valve chamber (10) and thereby closes one of the two outlet openings in each case while the other is opened.
- means for generating a permanent magnetic field for holding the valve element (16) in one working position at any one time, which have two poles (6, 7) and at least one permanent magnet (28, 29) arranged outside the valve chamber (10),
- a control coil (24) for generating a control magnetic field for selectively moving the valve element (16) between the working positions,
**characterised in that**
- the control coil (24) is arranged substantially parallel to the centre line of the poles (6, 7) next to the valve chamber (10) and
- the valve has a mirror-symmetrical overall construction with respect to a centre plane of the valve chamber (10) transversely to the direction of movement of the valve element (16).

2. Refrigerating circuit for a refrigerating system comprising a plurality of refrigerating compartments, a compressor, a condenser, a plurality of evaporators each associated with one of the refrigerating compartments, and at least one bistable electromagnetic reversing valve according to claim 1 for connecting the condenser to one or more of the evaporators.

3. Refrigerating circuit according to claim 2, **characterised in that** return means connected to both poles (6, 7) for the magnetic return from at least one of the permanent magnets to the poles (6, 7) are not provided.

4. Refrigerating circuit according to claim 2, **characterised in that** the closing force of the change-over valve (1) is determined by one or more permanent magnets (28, 29).

5. Refrigerating circuit according to any of the preceding claims 2 to 4, **characterised in that** a closing component (19, 20) is rigidly attached to the valve element (16).

6. Refrigerating circuit according to any of the preceding claims 2 to 5, **characterised in that** the valve element (16) of the change-over valve (1) comprises a hardened sealing surface.

7. Refrigerating circuit according to any of the preceding claims 2 to 6, **characterised in that** the valve element (16) of the change-over valve (1) comprises at least one partially hardened closing component (19, 20).

8. Refrigerating circuit according to any of the preceding claims 2 to 7, **characterised in that** the change-over valve (1) comprises a hardened valve seat (21, 22).

9. Refrigerating circuit according to any of the preceding claims 2 to 8, **characterised in that**, in the change-over valve (1), a ball (19, 20) is arranged as a closing component in the valve element (16).

10. Refrigerating circuit according to any of the preceding claims 2 to 9, **characterised in that** the diameter to length ratio of the valve element (16) is greater than 1:4.

11. Refrigerating circuit according to any of the preceding claims 2 to 10, **characterised in that** a residual air gap (33) is provided between the valve element (16) and one pole (6, 7).

12. Refrigerating circuit according to any of the preceding claims 2 to 11, **characterised in that** the control coil (24) of the change-over valve (1) is detachable.

13. Refrigerating circuit according to any of the preceding claims 2 to 12, **characterised in that** a casting compound which at least partially surrounds the valve body (3)is provided in the change-over valve (1).

14. Refrigerating circuit according to any of the preceding claims 2 to 13, **characterised in that** the change-over valve exhibits a casting compound for attaching at least one permanent magnet (28, 29).

15. Refrigerating circuit according to any of the preceding claims 2 to 14, **characterised in that** the change-over valve (1) comprises a casting compound (30) for attaching at least one sheet metal yoke (25, 26) for the control coil (24).

16. Refrigerating or freezing device, **characterised in that** it has a refrigerating circuit according to any of the preceding claims 2 to 15.

## Revendications

1. Valve électromagnétique bistable pour un circuit réfrigérant pour une installation de réfrigération, ayant les caractéristiques suivantes :
- une chambre de valve (10) ayant au moins une ouverture d'entrée (14) et au moins deux ouvertures de sortie (11, 12),
- un élément de valve (16) au moins partiellement en matière magnétique, qui ne comporte aucun aimant permanent, qui est déplaçable entre au moins deux positions de travail dans la chambre de valve (10) et ferme de plus, à chaque fois, une des deux ouvertures de sortie tandis que l'autre est ouverte,
- des moyens pour engendrer un champ magnétique permanent pour maintenir l'élément de valve (16) à chaque fois dans une position de travail, qui présentent deux pôles (6, 7) et au moins un aimant permanent (28, 29) agencé à l'extérieur de la chambre de valve (10),
- une bobine de commande (24) pour engendrer un champ magnétique de commande pour déplacer au choix l'élément de valve (16) entre les positions de travail,
**caractérisée en ce que** :
- la bobine de commande (24) est agencée à côté de la chambre de valve (10) de façon généralement parallèle par rapport à l'axe central des pôles (6, 7), et
- la valve présente une structure globale symétrique relativement au plan médian de la chambre de valve (10) transversalement à la direction de déplacement de l'élément de valve (16).

2. Circuit réfrigérant pour une installation de réfrigération, comportant plusieurs espaces de refroidissement, un compresseur, un condenseur, et plusieurs évaporateurs associés à chaque fois à un des espaces de refroidissement, et au moins une valve d'inversion électromagnétique bistable selon la revendication 1 pour la liaison du condenseur avec un ou plusieurs des évaporateurs.

3. Circuit réfrigérant selon la revendication 2,
**caractérisé en ce qu'**aucun moyen de rappel relié aux deux pôles (6, 7) pour le rappel magnétique de l'aimant permanent vers les pôles (6, 7) n'est prévu.

4. Circuit réfrigérant selon la revendication 2,
**caractérisé en ce que** la force de fermeture de la valve d'inversion est déterminée par un ou plusieurs aimants permanents (28, 29).

5. Circuit réfrigérant selon une des revendications précitées 2 - 4,
**caractérisé en ce qu'**un corps de fermeture (19, 20) est relié rigidement à l'élément de valve (16).

6. Circuit réfrigérant selon une des revendications précitées 2 - 5,
**caractérisé en ce que** l'élément de valve (16) de la valve d'inversion (1) comporte une surface d'étanchéité durcie.

7. Circuit réfrigérant selon une des revendications précitées 2 - 6,
**caractérisé en ce que** l'élément de valve (16) de la valve d'inversion (1) comporte un corps de fermeture (19, 20) au moins partiellement durci.

8. Circuit réfrigérant selon une des revendications précitées 2 - 7,
**caractérisé en ce que** la valve d'inversion (1) comporte un siège de valve durci (21, 22).

9. Circuit réfrigérant selon une des revendications précitées 2 - 8,
**caractérisé en ce que**, dans la valve d'inversion (1), il est monté une bille (19, 20) comme corps de fermeture dans l'élément de valve (16).

10. Circuit réfrigérant selon une des revendications précitées 2 - 9,
**caractérisé en ce que** le rapport du diamètre à la longueur de l'élément de valve (16) est supérieur à 1 : 4.

11. Circuit réfrigérant selon une des revendications précitées 2 - 10,
**caractérisé en ce qu'**un entrefer résiduel (33) est prévu entre l'élément de valve (16) et un pôle (6, 7).

12. Circuit réfrigérant selon une des revendications précitées 2 - 11,
**caractérisé en ce que** la bobine de commande (24) de la valve d'inversion (1) est démontable.

13. Circuit réfrigérant selon une des revendications précitées 2 - 12,
**caractérisé en ce qu'**une masse de remplissage est prévue dans la valve d'inversion (1), qui entoure au moins partiellement le corps de valve (3).

14. Circuit réfrigérant selon une des revendications précitées 2 - 13,
**caractérisé en ce que** la valve d'inversion présente une masse de remplissage pour la fixation d'au moins un aimant permanent (28, 29).

15. Circuit réfrigérant selon une des revendications précitées 2 - 14,
**caractérisé en ce que** la valve d'inversion (1) comporte une masse de remplissage (30) pour la fixation d'au moins une tôle de culasse (25, 26) pour la bobine de commande (24).

16. Appareil de réfrigération ou de congélation,
**caractérisé en ce qu'**il présente un circuit réfrigérant selon une des revendications précitées 2 - 15.
